# EUROPEAN PATENT APPLICATION

(11) **EP 1 763 192 A1**
(43) Date of publication of application: **14.03.2007**
(21) Application number: 05300723.3
(22) Date of filing: 07.09.2005
(51) Int. Cl.: H04L 29/06, G06F 21/00

(54) **Cascaded personalization of an end-to-end encryption module**

(71) Applicant: ALCATEL, 75008 Paris (FR)
(72) Inventor: Ohle, Michael, 14715 Milower Land OT Bützer (DE)
(74) Representative: Rausch, Gabriele

(57) **Abstract**

This invention relates to a method for personalizing an end-to-end encryption module (CM E+K) as usual, i.e. authenticating a user and providing based on the authentication a certified identity and further by granting privileges on personalizing recursively a set of further end-to-end encryption modules and authenticating a user by providing a certified identity for the further user. This provides a method for communicating within an end-to-end encryption system using an end-to-end encryption module, where a used is enabled authenticating a further user by personalizing an end-to-end encryption module for the end-to-end encryption as described above. The invention further relates inter alia to an end-to-end encryption module (CM E+K) comprising personalized authentication means (E) and encryption means for an end-to-end encryption between at least two authenticated users where the end-to-end encryption module is personalized by carrying a certified identity, where the end-to-end encryption module comprising further comprising authorization means (K) of granting privileges on personalizing recursively a set of further end-to-end encryption module and authentication means for authenticating a further user and providing based on the authentication a certified identity for the further user. The invention further relates to a device comprising an end-to-end encryption module and a communication system for end to end encrypted communication.

## Description

This invention relates to a method for personalizing an end-to-end encryption module. The invention further relates to a method for communicating within an end-to-end encryption system, an end-to-end encryption module, a device comprising an end-to-end encryption module, and a communication system for end encrypted communication.

The structure of authorities, such as police, ambulance, or fire departments requires when sharing a common digital (mobile) network a secure End-to-End (E2E) communication. Additionally to the usual network-specific air interface encryption (AIE), such authorities demand a nationally homogeneous End-to-End security concept to ensure safeguard authentication of information and to ensure secure encryption for user intercommunication, preferably based on a public-key-infrastructure (PKI). Such a communication network might be based on the **TE**rrestrial Trunked Radio (TETRA) standard. This standard meets the requirements for communication within Public Safety and Security (PSS). E.g. of the German Federal Office for Information Security requires to implement the E2E service, see Federal Office for Information Security (BSI): "Integration of End-to-End Encryption into Terminals", version 0.9, May 2004, p. 29.

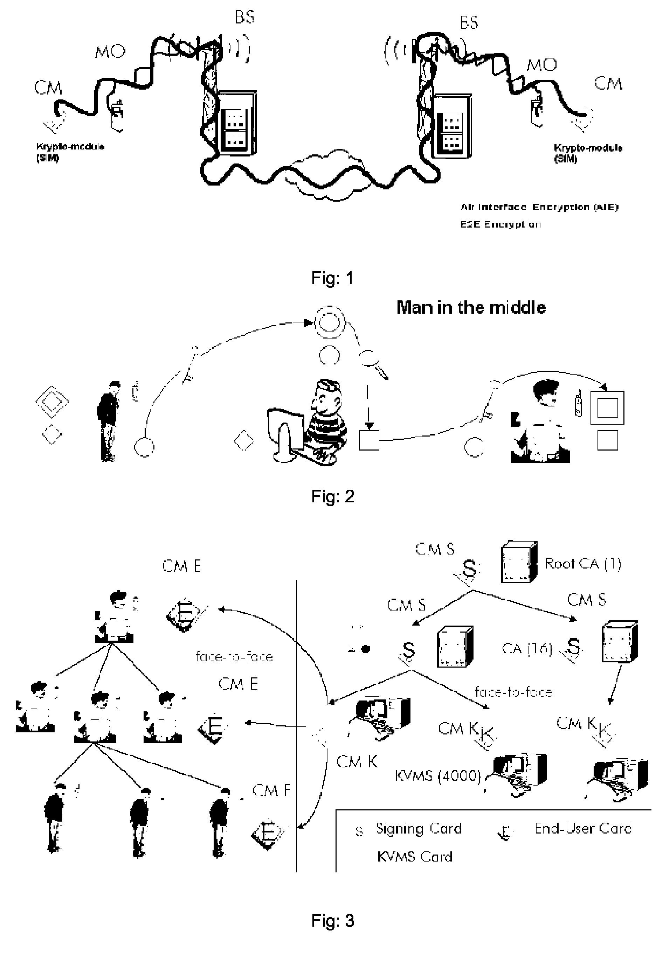

The security of the Air Interface Encryption (AIE) is warranted from base transceiver stations BS to the mobile stations MS while the backbone-net usually delivers the keys for that encryption in plaintext as shown in Fig 1. Digital signals can be filtered systematically for all possible criteria in add-drop multiplexers and easily be stored or retransmitted afterwards when the core-net is under the users' control, and this would be sufficient to protect data from eavesdropping.

Several authorities might use a nation-wide radio network. There might be a central operator providing extensive and fast support as well as maintenance-service. If a higher level of confidence is necessary, a independent security system has to be implemented. End-to-End Encryption is an alternative to avoid espionage of sensitive data.

The E2E Encryption with its key-management is an application that is monitored by the users, hiding the content from the transmission system. However, the data of the terminals' position and movement, which are provided by the network-management messages, have to be protected too. The applications preferably run on secure crypto modules (CM), which influence the signals the end of a communication channel, implying that signalling messages have not be involved in the E2E encryption.

Six aspects for secure communication in A. Nash, W. Duane, C. Joseph, D. Brink: "PKI - Implementing and Managing E-Security", 1^{st} issue, mitp-Verlag, Bonn, 2002, which have to be considered before planning a secure network. The first is secrecy, which is forced by encryption. Exemplary two possible crypto-operations are transposition or substitution; which can be combined as well. Transposition means swapping the letters and numbers of a message among each other whereas substitution is the exchange for a new symbol. If the previous block of a message has an impact on the following encryption, it is called Electronic Code Book (ECB). ECB is easy to use in data encryption, but vulnerable to statistical attacks. The Cipher Block Chaining (CBC) compensates this disadvantage by connecting a block of plain text with the last ciphered block by means of a modulo 2 addition. Furthermore the encryption can be separated by the effort for the key exchange: The symmetric ciphering uses the same key for ciphering and deciphering at the transmitter's as well as at the receiver's end. The keys have a common length of 80 - 256 bits and are connected to the plain text with a modulo addition. The deciphering occurs equivalent with the same key in the same way.

The resulting data keep their length and the symmetrical method is fast, considering the acquired strength, because the change of bits can be done very fast by hardware. The encryption happens bit by bit without additional calculation with a negligible time delay. To achieve the securest kind of encryption (the "one-time-pad"), the symmetrical key has to be as long as the message and should only be used once. The bits also must have a linear distribution of probability over the whole length of the key. These unhandy preconditions can be improved if a short symmetrical key is used as a seed of a pseudo-random generator, whose result gives no hint on the original seed. This generator is used to extend the secret of a small key, e.g. 128 bits. It produces a continuous key stream segment (KSS) that interacts with the plaintext in terms of a modulo 2 addition. An advantage of this method is the fast realization because it avoids complex mathematical calculations and could be realized in hardware.

Symmetrical keys have a disadvantage for group-communication. The number of possible partners has a quadratic impact on the number of involved keys.

As a matter of course, a symmetrical key always has to be delivered to the conversational partner in a secure way. A face-to-face meeting would be a required. While the symmetrical key's quality decreases with the rise of data traffic, a periodically fast key-exchange would be necessary. Consequently, this makes the symmetrical ciphering unfavourable for group communication. The secure key negotiation can be solved with the Diffie-Hellman Key Exchange, which uses two values that have to be exchanged for creating a shared secret. But the clear knowledge of the partner's identity and the prevention of the man in the middle are not guaranteed.

The asymmetric ciphering compensates this disadvantage of exchanging secure keys, as only keys, that do not need to be kept secret have to be exchanged. Every user has a dedicated key-pair (public & private key) from which the user himself must only know the private key. The public key may be distributed to the communicational partner in plain. This is an important simplification to the key management, because the public key does not have to be exchanged face to face and it decreases the number of different keys that have to be exchanged.

There are several mathematical methods like the integer factorization problem (IFP) or the discrete logarithm problem (DLP) to implement an asymmetrical ciphering.

The principle for asymmetric algorithms is always basically the same - one key of a key-pair can decipher what is encrypted by means of the corresponding opposite key. For encryption, the recipient's public key is used by the originator to cipher a message whereas it is only possible to decipher the message with the recipient's private key. Although the encryption is said to be mathematically secure with the adequate key length, it is possible to intrude into the asymmetrical ciphering as shown in the Fig. 2.

Before the intrusion occurs, a man in the middle (MITM) would manipulate the exchanged public keys. Both users however believe that the public key of the MITM belongs to their well-known partner. Ciphering would happen like described, but in this case to the wrong public key. The MITM deciphers the message, has complete knowledge of the content and can modify the information. After having done this, he encrypts the message with the recipient's correct public key. The modification stays unobserved.

A solution for the MITM attacks is offered by a public key infrastructure with certificates from a known third person where it is checked, whether a public key belongs to the correct communicational partner. The disadvantage of asymmetrical algorithms is the heavy key size of typically 1024-4096 bits. The message is divided into sequences of the public key's bit length and ciphered afterwards. The length of the encrypted message depends on the redundancy of the data in asymmetrical ciphers.

Another important aspect for secure communication is integrity, which goes along with encryption. Integrity means that a message stays unchanged from sender to receiver. The chance, that a ciphered message is manipulated afterwards gives a new content with a proper meaning is very low without possessing the right key. It is sometimes not necessary to encrypt data but to ensure its integrity anyhow. This is possible by signing a small hash of the message. The digital signature is supported by asymmetrical methods.

After signing, i.e. ciphering a hash of a message with one's own private key, the recipient is able to decipher these data with the public key of the originator. For verification at the recipient's end, another hash is generated from the received clear message and compared with the deciphered hash, which was sent by the originator. If these hashes are equal, the integrity is proved and the message was not changed during the transmission by anyone who does not possess the recipient's correct private key. That ensures the identity of the originator. As a matter of fact, the source of the information is trustful and revisable for the recipient. Actually, the recipient has to be sure, that the public key belongs to the correct human, technical or tactical identity.

These scenarios for identification and integrity require the singleness of all private keys. A distribution or backup would always be a risk. Therefore the key-pair can be generated directly on the smart card and be stored in a secure memory.

Hashing functions are used to minimize the amount of the original data by mapping the message to a binary, consisting of a constant bit-length of e.g. 128 bits (MD5) or 160 bits (SHA-1). These functions should be true "one-way-functions", what means, that the result should give no hint to the original appearance of the message. Furthermore, it must not be possible to reconstruct a message, so that an existing hash would fit to that manipulated message ex post.

The process of checking and proving an identity is called authentication. There are 5 levels to prove and check an identity: possessing something (e.g. a key, SIM, identity card), knowing something (e.g. a PIN), having specific biometric identification (e.g. a unique fingerprint), being at a certain place (e.g. at an RA), having a special ability (sign a contract).

Popular asymmetrical authentication processes require a registration authority (RA) that is well known to a new member. The RA is a third person, comparing some of the explained methods to check the identity of the new user. The third person instructs a certification authority (CA) to sign a new certificate for the user, if the identification was successful.

Another known possibility for asymmetrical authentication is the so-called "web of trust" where the identity is not checked by an authority, but where owner of a public key should be verified in control of the users themselves. A favoured method for secure e-mail communication by to send the public key per e-mail and with a comparing phone-call of a hash of the concerning keys. It is common to sign a proved public key in a web of trust. This helps to rate the trustworthiness of an unknown user's key by means of its signature from a mutual friend (model for calculation of key legitimacy).

The authentication with symmetrical keys would also be possible, but the symmetrical authentication key needs to be unique to the protected information. This is e.g. used for the air interface encryption (AIE) in GSM and TETRA. This shared secret is again the weakness for an efficient group communication, because it must be forwarded, if the identity needs to be checked by several users.

If the authentication for a user was successful, a trustful communication is possible. However, if further rights are needed to continue a process when the identity is proved already, the authorization is another important fact. Authorization has to be considered independently from the authentication in a secure environment. A database could hold information about several rights of an identity or this information could be imported into the certificates during the process of personalization.

Non - repudiation is necessary, if the structure shall support contracts. The originator could not deny the dispatch of a signed message that he has caused in the past. Additionally to the identity, also the time is a critical factor for the communicational partners as well. A trustful clock must be able to sign messages on demand with its private key. This time-service has higher costs, but offers more security and less effort in the case of a corruption.

The idea of a public-key-infrastructure (PKI) is to offer an environment with trustable users and instances based on an asymmetrical ciphering. By doing so, it is possible to get into contact in a secure and authentic way, without sharing secrets (that are hardly exchangeable). A PKI offers a system, which issues, distributes, and verifies digital signed certificates. These certificates show the communicational partner, that the owner's identity was once checked at a trustful third party. The main elements of a PKI are: digital signed certificates, certification authority (CA), registration Authority (RA), certificate revocation list, register service / certificate directory, and validation Service.

Every user has a public/ private key-pair and dispatches his/ her own public key with the valid certificate, i.e. a certified identity, either to a register service or directly to the conversational partner before a trustful communication can be established. The register service also distributes the certificate revocation list. This list is necessary to exclude certificates that not yet expired, but said to be compromised. Users must compare a valid certificate with this revocation list to see, whether communication would is still secure with this certificate. Any other user must not know the private key, because it is used for identification. Additionally to the own keys, the dispatched public keys and the certificates of other users, everybody knows the public key of a special instance - the certification authority (CA) as the root-part of a trust-center. This CA's public key must not be exchanged over the air interface. It has to be delivered with the crypto-hardware and the algorithms, because it is used to eliminate the man in the middle by verifying the certificates through a validation service. The registration authority (RA) is the instance where the users request certificates. Furthermore it is the entity, which instructs the CA to issue a certificate. The RA can take the responsibility to authenticate the new users.

After the initial authentication to the certification authority, the registration authority closes a cycle of trust. In the further business, authentication between users is then only a question of trust in the procedures of this authentication and in the mathematically security of the crypto-algorithms. Sharing a secret is avoided with these arrangements.

The authentication during the call-setup between users can take place without active contact with the CA. That is called "off-line third party", if the third party prepares information a priori, which is available the users later on, see A.J. Menezes, P.C. v.Oorschot, S.A. Vanstone: "Handbook of Applied Cryptography", CRC Press, Florida, 1996, p. 548-549. Some preparations are necessary in order that the CA can act as the trustful backbone for the communication: Every single user has to register to a commissioner face-to-face at a registration authority (RA). If the user is legitimated through an identity card, the RA advises the certification authority (CA) to sign a certificate, which confirms the fusion of the user's key-pair to a single identity. This identity can be a human being or a name of a tactical function that is represented by the respective user. The tactical name might be the favoured choice for the BOS because that supports an easy handling of the crypto-modules during shift operation.

For communication, both users exchange their public key and their certificate, signed by the CA. The certificates are verified. As a result, the man in the middle during the public key exchange can be ruled out. A secure communication can be set up, based on the encryption with the public keys. The new connection between two geographically separated users is protected and verified by the trustful backbone over the CA. This is possible due to the relation of both certificates to the same certification authority.

Key management includes the generation, distribution, storage and revocation of keys. Essential for the complexity of the key-management is the lifetime of keys. Keys have a limited lifetime, depending on the purpose of use and the kind and amount of data that shall be protected. To ensure sufficient security this can lead to a busy key exchange. While the public keys can be transmitted over the air in plaintext, the private keys have to be distributed in a secure way or rather never leave the secure environment. They are secret and must only be known to the corresponding identity. For continuative security over years, the procedure of the save private-key-distribution has to be repeated in any way.

The purpose of a key pair defines the length of the public and the private key as well as the constellation its usage periods (UP). Generally a key is more secure, if it is dedicated to a single purpose. The originator- and recipient usage period of an encryption key may start at the same time. If encrypted data shall be stored, the originator UP can end years before the recipient UP. Keys to sign certificates may perhaps have a shorter length for the same security level. In some cases this is possible, because the recipient UP does not need to exceed the originator UP. In other words: after two years of signing service, it makes no sense to compromise a public signing key because its certificate expired anyway and no secrets are secured by this key.

The hybrid encryption uses the symmetrical encryption to ensure the secrecy and integrity of the plaintext. In addition, the asymmetric algorithm serves to reduce the effort for the key management. The disadvantage of the symmetrical algorithm is the insecure key exchange, what can be prevented by the discussed asymmetrical algorithms.

Tele-services such as individual calls or group calls etc. and data-services like the short data service are available in TETRA. Additional services, that are a special requirement for BOS are for example discrete listening (calls can be observed unnoticed), ambience listening (eavesdropping the environment of a specific terminal), or late entry (allows connectivity to existing sessions).

TETRA uses the time division multiple access (TDMA) system to access one radio channel. For voice and data (V+D), a slotted-ALOHA protocol is used with a random access or with a reservation for packet data. In the packet data optimized mode (PDO), slotted-ALOHA or DSMA without TDMA are possible. One radio channel has a bandwidth of 25 kHz and is divided into 4 time-slots. Typically, there are 4-5 carriers in one cell that means 16 to 20 logical channels. One channel provides a net data bit rate of 28.8 kbits/s whereas the channel's gross bit rate is 36 kbits/s. Each time slot lasts 14.167 ms and the trunked mode allocates one time slot as resource for the communication between all groups in the location area. Circuit switched data transmission is possible with more or less protected data from 2.4, 4.8 or 7.2 kbits/s each time slot. For more traffic during the data transmission, time slots can be combined for one connection. The packet data service X.25 and TCP/IP (transfer control protocol / Internet protocol) are also supported. The uplink and downlink is organized with a frequency division duplex (FDD). For normal applications half duplex is the preferred method in the daily work of Public Safety and Security (PSS), but duplex is possible through TDMA, too. The used Voice Codec to get an economic and robust transfer is A-CELP (Algebraic Code-Excited Linear Predictive) with 4.567 kbits/s. Its modulation is a Pi/4 DQPSK (Differential Quaternary Phase Shift Keying) with 2 bits per symbol. 8000 digital samples of speech per second with 16 bit apiece of pulse code modulation (PCM) are the input for the A-CELP algorithm. That builds a packet of 274 bits out of 480 samples for 60 ms of speech, which is transmitted in a single slot of 14.167 ms. The individual TETRA subscriber identity (ITSI) addresses a terminal all over the world. The ITSI have 10 bits mobile network code (MNC), 14 bits mobile country code (MCC) and 24 bits short subscriber identity (SSI). Furthermore, TETRA supports a power control for the mobile terminal in the range of 15 dBm to 45 dBm. A network configuration with its interfaces to the switching and management infrastructure (SwMI), as the controlling unit.

There is no specific instruction for an End-to-End Encryption in a TETRA network. The algorithms and key-management are outside the scope of the security-document of ETSI for TETRA. Encryption for PSS needs synchronization in the FDMA system. This is necessary for late entry to start with the right key stream segment (KSS) at the right time. Proposals for standard synchronization in case of a synchronous stream cipher are provided in ETSI: DRAFT prETS300 392-7: "TETRA - Voice plus Data; Part 7", Security", second edition, May 1999, p. 117 ff. The synchronization information may be in-band that means they are assigned to a stealing channel during the transmission. The signalling and key agreement for the E2E Encryption uses the Short Data Service (SDS), what is also proposed by the BSI Federal Office for Information Security (BSI): "Integration of End-to-End Encryption into Terminals", version 0.9, May 2004, p. 29.

Smart Cards, the exemplary end-to-end encryption module, are little plastic devices containing memory, digitally logic or even a processor with an interface of 6-8 contacts. The memory can be designed in the way that it is only addressable by the internal processor. The processor's algorithms can be secured by crypto-algorithms that check the identity of both, the user and the communicational partner. This is verified by means of the correct certificates or the correct personal identification number (PIN) to access the crypto-module or algorithms. These features make the smart card a save bearer for secret private keys, cipher-algorithms and public keys of certification authorities. Furthermore, they have a standardized interface and low power consumption.

Common smart cards in 2005 include a 32 bit controller with up to 66 MHz internal clock, >200 Kbytes ROM, >900 Kbytes EEPROM" 16 Kbytes RAM and special crypto machines, which are optimized for RSA, DSA or ECC algorithms. A true random number generator is realized in hardware. Prime numbers, which are necessary for strong keys, are gained by random numbers that are checked by estimating procedures like the test of Fermat or the test of Miller-Rabin.

Exemplary requirements for a Mobile Radio Network are described in Federal Office for Information Security (BSI): "Integration of End-to-End Encryption into Terminals", version 0.9, May 2004, p. 11-13. The aspects comprise especially an E2E Encryption to every user possible (Encryption = Standard Mode) based on a Crypto module, e.g. the smart card, mandatory for communication. The cryptographic concept should base on the "need to know" principle. The user management for encryption should be independent from network management. An identity related to an operational role should be supported and the costs for personnel and infrastructure should be minimal. The BSI provides a detailed concept and procedures for the technical key exchange during business.

The BSI, as the counsellor of the German public safety and security (BOS), gives a cryptographic concept of the integration of E2E encryption into terminals, see Federal Office for Information Security (BSI): "Integration of End-to-End Encryption into Terminals", version 0.9, May 2004, p. 18-23. This concept prefers the hybrid encryption what supports over-the-air re-keying (OTAR). An operation without OTAR, that means loading the keys manually, is also discussed and should be possible. The smart card serves as crypto module in these requirements. Main argument for the concept is the decentralized management of the crypto-groups through the tactical head offices, which are responsible for certain groups. Important for a manufacturer may be, that the BSI defines USAT/ESAT interface between the smart card and terminal and gives the length of their crypto-management messages.

The main problem, i.e. the secure communication is solved by the use of asymmetrical procedures in combination with a public key infrastructure (PKI), which handles the certificates. Real End-to-End security for an organization or an authority can only be achieved, if the user or a very trustful partner controls the base of trust, i.e. the CA. Moreover, all crypto- and key-management algorithms in the secure crypto-modules have to be verified by the user or an instance of the trustful third party and must be identified as correct. Considering all these parameters, some critical points still remain during the business. On one hand the trust in the authentication - process during personalization lies in the registration authority (RA). On the other hand the procedure of changing the asymmetrical key-pairs in the crypto modules is critical, when the lifetime of the keys expires. These facts have to be considered in the key management, as well as the speed of encryption, that is needed for the applications.

It turns out that the personalization effort for the realization of such a PKI with a smart card-based E2E encryption could be reduced. And further that it is possible to adjust the effort for security to the individual needs of a public authority or organization.

The problem of reducing cost and effort for personalization of crypto modules (e.g. smart cards) is solved by personalizing an end-to-end encryption module as usual, i.e. authenticating a user and providing based on the authentication a certified identity and further by granting privileges on personalizing recursively a set of further end-to-end encryption modules and authenticating a user by providing a certified identity for the further user. This provides a method for communicating within an end-to-end encryption system using an end-to-end encryption module, where a user is enabled authenticating a further user by personalizing an end-to-end encryption module for the end-to-end encryption as described above. And the problem is solved inter alia by an end-to-end encryption module comprising personalized authentication means and encryption means for an end-to-end encryption between at least two authenticated users where the end-to-end encryption module is personalized by carrying a certified identity, where the end-to-end encryption module comprising further authorization means for granting privileges on personalizing recursively a set of further end-to-end encryption module and authentication means for authenticating a further user and providing based on the authentication a certified identity for the further user. A device comprising such an end-to-end encryption module for end-to-end encrypted communication in a communication system might be adapted to personalize further end-to-end encryption modules. This allows establishing a communication system for an encrypted communication with a cascaded granting procedure.

In other word the invention replaces the usual distribution of keys at central sites based on authentication via recognized documents, e.g. passports, by delegating the granting rights of personalization procedure to already authenticated persons knowing personally further users transitively.

This is in the following described in detail, where
Fig. 1 shows a mobile communication system with end-to-end encryption according to prior art
Fig. 2 illustrates the man in the middle problem
Fig. 3 illustrates the method of personalization according to the prior art
Fig. 4 illustrates the method of cascaded personalization according to the invention
Fig. 5 illustrates a cascaded personalization method according to the invention

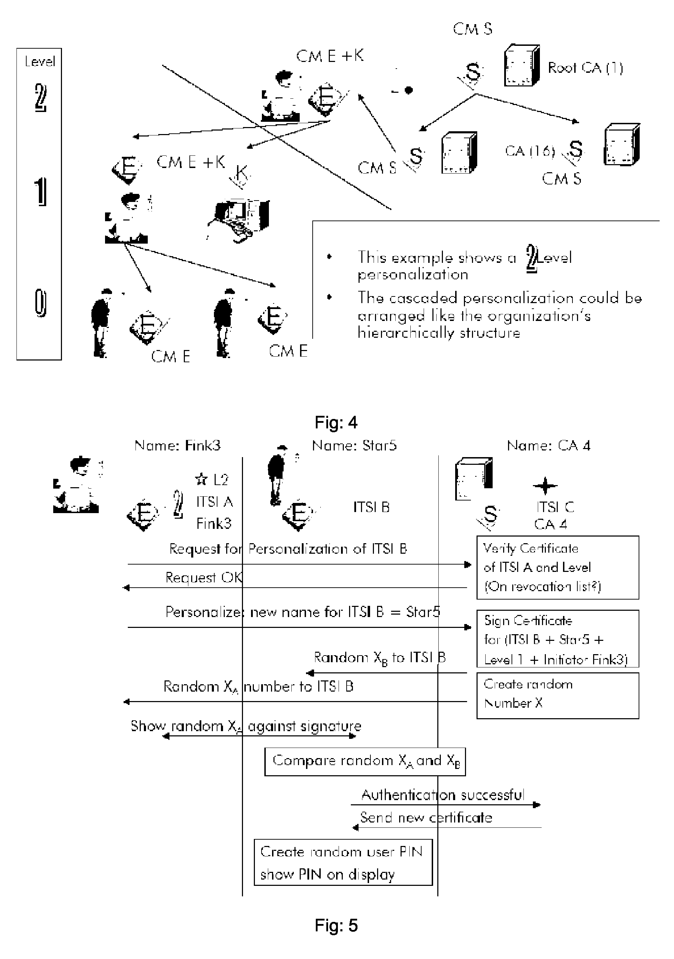

Fig. 5 illustrates the result of the cascaded personalization method according to the invention

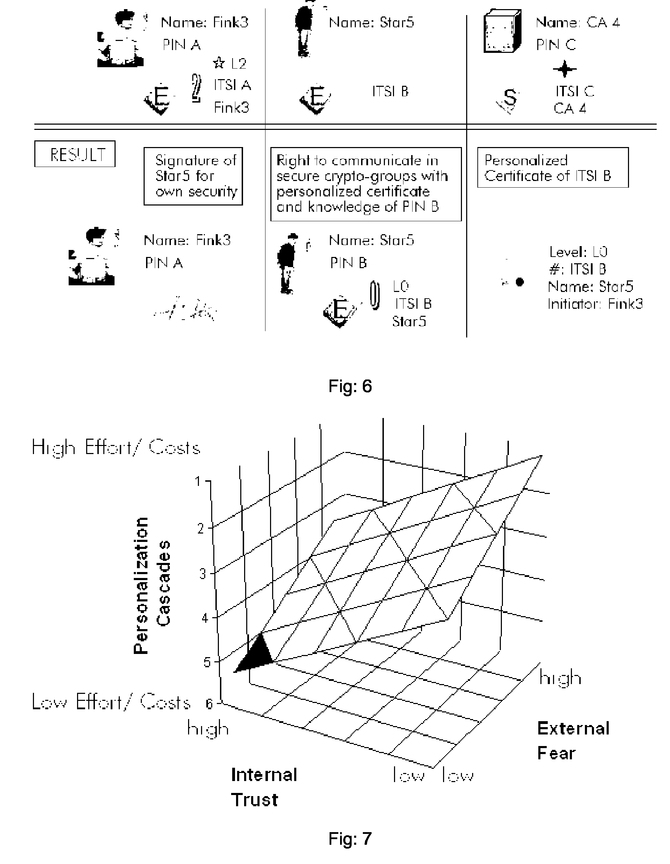

Fig. 6 illustrates a dimensional decomposition enabled by the cascaded personalization method according to the invention.

Fig. 3 shows the personalization according to the prior art. Each E-type crypto module CM E, i.e. each end user card is personalized, i.e. authenticated and authorized using a KVMS card CM C at a dedicated KVMS site within a circle of trust that is assured by a root CA via signing cards CM S.

The proposed exemplary solution is a crypto module for communication (type "E" in BSI's model) being able to personalize other crypto modules for E2E encrypted communication. An arbitrary terminal can be used for personalization as shown in Fig. 4. The right for personalization can be inherited down to a certain cascade with a defined maximum number of levels. 1, 2 Authorization may follow the users responsibility and the regulations within the organization. Certificates of the users additionally must contain the authorization level. A finite state machine (on the crypto card) steps through a defined number of asymmetric keys and the corresponding certificates in the crypto modules CM E+K as well as in the certification.

This has the advantage that a key change is easier. The lifetime of a crypto card could be increased. The process for personalization may improve the card handling and the usage of the PINs to get authenticated access to the crypto functions of a smart card. And the invention will reduce cost and effort for personalization of crypto modules.

BSI's concept does not use degree of freedom given in network of trust, shown in Fig. 7, e.g. responsibilities and duties within an organization such as police. The proposed BSI model equals a personalization with one cascade. 4000 dedicated users (control room operators - CRO) in the crypto-management stations (KVMS) are responsible for personalization of about 500.000 subscribers. These highest technically trustful instances in the organization pretend, that these CROs are also the highest trustful persons in the organization. Actually, these operators are chosen by supervisors, who are also integrated in a hierarchically system of regulations and responsibilities.

Crypto modules being able to personalize other crypto modules for E2E encrypted communication overcome this. An arbitrary terminal, e.g. mobile phone with crypto module can be used for personalization. The right for personalization can be inherited down to a certain cascade with a defined maximum number of levels. Certificates of the users additionally must contain the authorization level and optionally the identity of the issuing module to get an easier handling in case of intrusion. A finite state machine (on the crypto card) could steps through a defined number of asymmetric keys and the corresponding certificates in the crypto modules as well as in the certification authorities necessary: trustful time in the CAs. The personalization process may improve the card handling and the usage of the PINs to get authenticated access to the crypto functions of a smart card.

The traffic in a tactical group is decrypted with a stream cipher. It uses a key stream generator (KSG), i.e. a pseudo random sequence generator to extend the lifetime of the symmetrical traffic encryption key (TEK). The TEK, together with an initialization value (IV), serves as seed for the KSG. The IV is needed for late entry and changes periodically, so that the receivers can synchronize the KSG, even if they did not listen from the beginning (late entry). This IV must be transmitted with the traffic in a defined way, which is done by a synchronization frame. The TEK has to be distributed to the entire talk group and is protected during the transmission by a symmetric key encryption key (KEK). The changing period of the TEK depends on the control room operator (CRO) in the tactical head office. With this decision he can influence the security level. The new TEKs and KEKs are generated in the key management station KVMS, situated next to a tactical head office. In the future there are said to be 3000 - 4000 KVMS. The KEK is supposed to be unique and changes not unless the mobile terminal registers to a different tactical head office. For Direct Mode (DMO) the TEK can be created by one terminal, which acts as a master in the closed group afterwards.

The exchange of the KEK is realized and secured by an asymmetrical crypto algorithm, which bases on the elliptic curve cryptography (ECC). The asymmetric key-pair is generated during the process of personalization on the smart card. The exchange of the public key must happen between correct identities without harming the integrity of the messages.

There are three types of smart cards used in the concept of the BSI. A first "end-user card", type "E", is used for transmission of data and speech from user to user. It is personalized by a CRO, who uses a crypto card of type "K" in one of the circa 4000 crypto-management stations (KVMS). This card type "K" is used in the KVMS to send crypto messages to a trust-center. In addition, it is used for the key-management messages to the card type "E" and for the exchange of KEKs to another KVMS. For personalization, the user of card type "K" has to ensure the correct identity of a new user and guarantee, that the new user really gets the personalized card of type "E" safely. The last "signature card" (type "S") is used in the distributed CAs to sign certificates for new users with card type "E" after the request for personalization by the CRO in the KVMS. The type "S" card in the root CA is used by the operator of the trust center to sign the type "S" cards of the distributed CAs. There is proposed a number of 16 distributed CAs by the BSI. The root CA is the highest instance of the trust center and is realized as an autonomous system without electronically interconnection to the environment. Moreover, every smart card of type "E" and "K" is initialized with the crypto algorithms and registered in the secure environment of this root CA. This registration might ensure the accurate identification before the smart cards are initialized and personalized in the KVMS.

The identity of the users is related to the smart card-type "E". The control room operator has the function of the registration authority (RA). The registration authority checks the identity of the users, requests a certificate for a new user and furthermore makes the requests for revocation if any equipment was stolen or corrupted. The requests go to a dedicated certification authority (CA) in the trust center, which signs new certificates and the revocation list. After identification, the smart card is initialized with a subscriber ID for the technical communication in the KVMS. Above all, the card type "E" contains its signed certificate with the tactical name. The components of a KVMS, that are physically situated next to the tactical head office. Initializing means that the operating system and the crypto algorithms are stored in the card whereas registering will ensure, that the cards derive from the correct source and are not bogus.

When all cards are equipped with valid certificates, the first radio contact from a mobile terminal to the KVMS will require the generation of a KEK with an own identification-number. The KEK is saved encrypted in the KVMS to use it again for changing the group-specific TEK. The TEK is then transmitted encrypted with the appropriate KEK of the mobile terminal. The TEK is also saved with the associated group. This key must be saved in order to distribute it to subscribers, who use the late entry. It may be also necessary to distribute this TEK to a different KVMS to ensure, that the mobile terminal of a foreign control room is able to join the same group. The TEK is then secured by the card type "K" with the hybrid algorithm between the two management stations. There are always 3 different versions for the TEK saved in the mobile station; one in current use, one future TEK and the last used TEK. This is realized to ensure a quick change to a new TEK during the ongoing communication.

This concept is enriched by a cascaded personalization suitable to all kind of organizations with a topological structure of more than one hierarchy-level. Hierarchies are usual for large organizations to be controlled by a single person. The authorization is spread among people who run through a qualification-process in order to act with respect to the organization. These people are authorized to decide in a scale that is defined by the trust of the organization.

It has several advantages to bind the authorization into a technical device that is accessible only by this special person. If many people, with a different level of trust, share such a device the authorization may only permit the actions that are possible for the identity with the lowest level of trust. In that special case, the authorization always concerns the right to personalize a new user. Depending on the new user's level of authorization it must be decided, whether he or she is able to personalize new users again. That means the authorization level of the new user would be important. To defuse this critical point, it is imaginable to limit the maximum authorization level in advance with respect to the size of the organization. The level of trust could decrease, considering the issuing person's authorization level.

The concept takes into account the conclusions from the basics as well as recommendations from the BSI and the National Institute of Standards and Technology (NIST). It affects the process for personalization, the key-management functions of the smart cards in the mobile terminals as well as the structure of the used certificates. It must be pointed out, that the security is based on the responsibility of the superiors for their staff in both models, the concept of the BSI and the proposed concept for a cascaded personalization in this chapter.

The presented cascaded concept for personalization support the hybrid encryption, as well, to combine a secure key exchange with a fast encryption of the traffic. The symmetric traffic encryption keys (TEK) and the key encryption keys (KEK) proposed by the BSI offer a fast encryption and decryption (with TEK) and key management messages, which cause only little additional traffic (with KEK). An asymmetrical key algorithm serves for authentic and secure change of the KEKs between the mobile terminals and the KVMS in tactical head office. Communication to exchange TEKs between several crypto-management stations in order to connect different crypto groups bases on the asymmetrical keys, as well. The certificates for the smart cards are signed in the secure environment of the root CA for their first secure identification. A generation of the key-pairs in the crypto-smart cards avoids the eavesdropping of the private key, in addition to the secure and insular environment of the root CA

The private key is unique and only known to the respective crypto-module, what is a requirement for identity, confidentiality and integrity with asymmetric algorithms. The fast estimating -algorithms allow an efficient generation of key-pairs, even in case of a smart card as crypto-module.

The cascaded model might use the three types of crypto cards as described by the BSI. A substantial difference is the function of card-type "E". The authorized holder of the end-user cards has the opportunity to act as a registration authority (RA) for the organization. In other words: the dedicated right for personalization is devolved from cart type "K", that is situated in the KVMS in BSI's concept, to any arbitrary crypto card in the organization. An additional security is obtained, if this authorization is separated into different cascades with a maximum level. Consequently the right for personalization can be inherited down to a certain cascade in a path of responsible persons. The inheritance might follow the organization's hierarchically structure with all its responsibilities, regulations and duties. This concept extends also the lifetime of a smart card, because the lifetime strongly depends on the crypto-periods of the asymmetrical keys and is therefore related to the key-management.

The process of a cascaded personalization is shown in Fig. 5., where a first person with name Fink3 of level2 requests a personalization of a crypto module of a second person named Star5 from the CA with the name CA4. The CA verifies the certificate and the credentials of the first person. Then the first person personalizes, i.e. authenticates the name of the second person over the CA. The CA therfor signs the certificate for second person's crypto module ITST B with the name of the second peron Star5. Optionally additional topological and descriptive attributes could be memorized, e.g. the first person's name or credentials etc. Then the CA provides random numbers to both persons that are exchanged to validate at the second person's crypto module the circle of trust. Finally the crypto module is personalized by the certified identity, e.g. comprising a key pair, and a PIN is generated.

Fig. 6 shows the result of the procedure in shown in Fig. 5. The first person has signed for the second person. The second person got the right to communicate via the certified identity, i.e. the personal certificate that can be activated by the provided PIN. And the CA knows the personalized certificate of the new second person.

Saving a lot of effort for secure communication would be possible, if a mobile end-user is responsible for personalization (task of RA) and the authentic communication between CA and the crypto modules is prepared before. If the CA could guarantee, that a public key belongs to a card before communication, there would probably be no technical chance to intrude as MITM in the process of personalization. The signing of the relevant public keys for the crypto card must therefore occur in the trust center system. This process is comparable with the mentioned "registration" by the BSI.

After establishing this technical security, there is still a possible way to intrude as a man in the middle. This can occur on one hand due to an external human attack. In this case, a person tries to prove a wrong identity, for example with a bogus identity card. On the other hand, an attack from the inside of the organization would be possible, if the control room operator personalizes a crypto module with a wrong identity. The last attack is even possible in the cascaded concept for personalization. However, the intrusion from extern can be reduced, if the authorized registration authority (RA) knows the new user personally. A face-to-face meeting between a trustful RA and a new user, who is well known to this RA, minimizes the danger from external intrusion. This can be gained with a cascaded personalization as well, if the number of possible personalization is limited for one crypto module. The following picture shows an example for a possible cascaded personalization.

The certificates in the cascaded personalization must include the own authentication-level for terms of personalization. The devolved level of personalization may automatically decrease for the new user. With a level zero, it would not be possible to personalize further crypto-modules. The certificates may also contain the identity of the issuing person (RA). This proposal serves a user-friendly handling of re-personalization in case of an intrusion. This provides the opportunity to revoke a defined path in the cascade, if a key seems to be compromised or another kind of corruption happened.

Only if the symmetrical keys for the ciphering of key-management messages (KEKs) and the traffic (TEKs) are generated by the infrastructure of the user, the effort for an E2E encryption is reasonable. This avoids unnoticed manipulation and distribution of the keys. The key-management must be updated when subscribers leave or join a group. That goes with the idea to situate a KVMS next to a control room.

A difference to the BSI's concept could be the crypto periods of the used keys. Latest successes in factorization of numbers for the RSA algorithm may strongly influence the security of the known algorithms. In addition, the asymmetric ECC algorithm is a young algorithm compared with RSA. In some years of evaluation, this algorithm could be compromised because of an unknown backdoor to its today's security. Additionally, new and unknown technologies for the fast calculation of mathematical problems may reduce the lifetime of the keys dramatically in the future. The key exchange of the TEKs for communication may depend on the instruction of a control room operator (CRO) but this has little effect, if the keys securing TEKs are not changed in adequate periods. The possibility, that the own asymmetric pair is corrupted increases with time because the elements of the public key can be used to analyze the missing private key. Furthermore, it is not impossible, that a brute force attack finds a corresponding key in some days, despite the assumed lifetime for the corresponding key-sizes.

The consequence for a secure E2E encryption is to consider changing periods for asymmetrical keys, too. The crypto periods, which are proposed by the NIST should preferably supported in the cascaded concept. For a very complex solution, the cards with the expired key-pair could be collected and replaced to a CA for the purpose of signing the smart card's new generated public key. There are two scenarios, where a third person is involved. On one hand it is the trustful RA for correct personalization of the crypto cards mapping an identity to a card. On the other hand it is the trustful CA for establishing technical secure communication between the smart cards. The delegation of this last mentioned business to an instance of the organization might result in the loss of the technical security. The man in the middle could intrude in the backboned trust, which serves authentication among the smart cards before the personalization is possible. Consequently, in terms of providing certificates, the operator of a trust center has to assure, that his crypto modules are able to communicate with his CAs in a way, that the integrity of the messages and the identity of the crypto module is guaranteed.

A manageable solution for this problem could be the service of a secure time in the CA. This allows every crypto module to hold some asymmetric key-pairs with the corresponding certificate and successive crypto-periods on stock. The recipient usage period is therefore divided into consecutive period of about 2 years. A little overlap might support the uncomplicated switch to a new asymmetrical pair. This process could be combined with a re-personalization of the user for further security. This guarantees, that the crypto-module is in trustful hands, especially for long-time users. The correct time must be imported from the CA and the own certificate has to be checked for the correct crypto period before the secure key-management messages can be transmitted. The occurrence of this scenario is seldom, because the symmetrical KEK between a KVMS and crypto module (type "E") may have a lifetime of 2 years, too. These KEKs then used for 2 years to secure further personalization of the users. If the crypto period expired, the next key has to be used by the smart card. This could be implemented as a finite state machine. One card could be used 20 years, if 5 key-pairs are stored with a crypto-period of four years each.

The deciphering of the radio traffic is only possible with the correct TEK and the correct handling of the initialization vector. For the purpose of lawful interception, a hint to the used TEK must be available in the traffic over the air interface. An identity number for each generated TEK could be stored in a database of a KVMS. This ID would be sent in plain text in the protocol for a session that is secured by this TEK. The lawful entity can be integrated in the PKI in the way, that its public key is used by the KVMS to cipher these keys. After changing to a new TEK for one calling group, the former TEK has to be deleted. The respective ciphered key is still available in the KVMS and sent to the lawful entity a demand with respect to the regulations. This TEK is now only available for the lawful entity. The further security of the group is not harmed by a "corrupt lawful interceptor", if the control room operator (CRO) changes to a new TEK.

The communication in Direct Mode (DMO) is independent from the infrastructure of the operator. The mobile terminals must therefore distribute the used TEKs. Two solutions are possible to support a lawful interception. In a first scenario, the mobile that is called master in the BSI's concept generates a TEK for the segregated group. It may store this TEK with the date of generation in order to associate this call to the respective key later. With the next login to the radio network, this information is sent to the KVMS that is related to the master crypto module and stored, as described before. For a second solution, the crypto modules get a certain number of TEKs, that are dedicated only for usage in Direct Mode. These TEKs possess their associated ID from the KVMS.

## Claims

1. A method for personalizing an end-to-end encryption module (CM) comprising the steps of authenticating a user and providing based on the authentication a certified identity, **characterized by** further comprising the steps of granting privileges on personalizing recursively a set of further end-to-end encryption modules (CM) and authenticating a user by providing a certified identity for the further user.

2. The method according to claim 1, **characterized in that** the certified identity comprises a key pair of a public key infrastructure.

3. The method according to claim 1, **characterized in that** the privileges on personalizing recursively a set of further end-to-end encryption modules are limited and the method comprises the further step of controlling whether the privileges are exhausted.

4. The method according to claim 1, **characterized by** further comprising the step of bookkeeping of a certified identity that authenticated a further user or granted a privilege.

5. The method according to claim 2, **characterized in that** a privilege or a certified identity or the key pair has a temporary validity and the method comprising the further step of verifying the validity.

6. The method according to claim 5, **characterized in that** a temporary privilege that is run of validity is extended by renewing the certified identity.

7. A method for communicating within an end-to-end encryption system (MO, BS, CA) using a end-to-end encryption module, **characterized by** comprising the step of authenticating a user by personalizing an end-to-end encryption module for the end to end encryption according to claim 1.

8. An end-to-end encryption module comprising (CM) personalized authentication means and encryption means for an end-to-end encryption (CME) between at least two authenticated users where the end-to-end encryption module is personalized by carrying a certified identity, **characterized in that** the end-to-end encryption module comprising further comprising authorization means (CM K) of granting privileges on personalizing recursively a set of further end-to-end encryption module and authentication means for authenticating a further user and providing based on the authentication a certified identity for the further user.

9. A device (MO) comprising an end-to-end encryption module (CM) for end to end encrypted communication, the end-to-end encryption module (CM) is personalized by carrying a certified identity, **characterized in that** the device is adapted to personalize a further end-to-end encryption module (CM) according to claim 8.

10. A communication system (CM, MO, BS) for end encrypted communication, **characterized in that** the communication system comprises devices (MO) according to claim 9.
